# EUROPEAN PATENT SPECIFICATION

(11) **EP 0 528 927 B1**
(45) Date of publication and mention of the grant of the patent: **15.10.1997**
(21) Application number: 91909586.9
(22) Date of filing: 17.05.1991
(51) Int. Cl.: G06K 17/00, G06K 19/08

(54) **CARD READER**
KARTENLESER
LECTEUR DE CARTES

(30) Priority: 18.05.1990 GB 9011227
(43) Date of publication of application: 03.03.1993
(73) Proprietor: AMPY AUTOMATION - DIGILOG LIMITED, Deeping St James Peterborough PE6 8RS (GB)
(72) Inventor: PAYNE, Kenneth 19 Firdale Close Peakirk, Peterborough PE6 7NS (GB); PALMER, Trevor, Walter, Peterborough PE6 8EY (GB); WAND, Richard, Peterborough OE6 8QQ (GB)
(74) Representative: Nash, Keith Wilfrid
(86) International application number: GB9100785
(87) International publication number: WO9118369

(56) References cited:
- EP-A- 0 223 395
- WO-A-89/03098
- FR-A- 2 296 227
- FR-A- 2 625 578
- GB-A- 2 218 041
- US-A- 4 524 269
- PATENT ABSTRACTS OF JAPAN vol. 9, no. 199 (P-380)(1922) 16 August 1985, & JP-A- 60 63690 (TOSHIBA K.K.) 12 April 1985, see the whole document

## Description

### Field of Invention

This invention concerns machine readable cards and card readers.

### Background to the invention

It is known to provide a card having an initial credit of say 10 units, which as the card is used, is decremented until all have been utilised. An example of such a card is a so-called Phone Card as obtainable from British Telecom.

The chief difficulty with all such cards is that they do not show visibly what, if any, credit remains.

Published UK Patent specification No. GB-A-2 218014 (The Plessey Company Limited) shows a card which, in addition to magnetically stored data, can carry visible markings, applied by a card reader, to indicate the amount of credit remaining on the card. However, this indication is an approximation, and any errors in the magnetic writing of new data on the card can lead to the wrong amount of credit being detected when the card is next used.

It is an object of the present invention to provide a card reader and preprinted card for use therewith which does not suffer from these disadvantages.

### Summary of the invention

According to one aspect of the present invention, there is provided a card reader for use with cards of the type having a magnetic surface to and from which data can be written and read magnetically and which in addition include printed markings thereon, the card reader being adapted to read magnetic data from and write magnetic data to such cards when inserted therein, and comprising marking means within the reader for visibly marking the card relative to at least part of the printed marking thereon before the card is ejected from the reader, characterised in that there is provided a single card receiving slot so that an inserted card is moveable in one direction during the reading cycle and in the reverse direction during the writing and marking cycle, and drive means operable before the card is ejected to drive the card once again through the reader to enable the latter to re-read the newly written magnetic data on the card to verify that the information written to the card is correct before it is ejected.

Typically the marking means is operable after the magnetic data has been read, a particular electric signal has been generated and data written to the card.

Thus in a card reader according to the invention which is for use with cards on which the printing thereon includes a scale, which is adapted to read credit data from a card and after a debit instruction has been raised to write fresh data to the card indicating the reduced credit remaining, means is provided to mark the card relative to the printed scale thereon to indicate the amount of credit remaining, or the debit amount of credit.

The marking may be by way of inking or indenting or punching or cutting or slitting.

The card may be driven by a motor.

The scale may be a plurality of equally spaced markings or graduations or a printed wedge with or without graduations.

The scale may be such as to indicate, in association with the mark, the remaining credit by way of percentage or proportion of the original total credit. Where the card relates to monetary units of say 10p, each graduation may correspond to 10p of value.

It is a further feature of the invention that the card reader is one in which the card is read and the current credit data noted as it is inserted and after a debit instruction has been implemented, has the new reduced credit data written to it as it is withdrawn. Moreover, the visible marking of the card preferably also occurs during card withdrawal.

In a preferred arrangement, therefore, the movement of the card is sensed and a marking means marks the card at the correct time in its withdrawal movement appropriate correctly to indicate on the printed scale the amount of remaining credit. The remaining credit may be sensed from the magnetic information on the card and a visible marking may be made on the card to indicate the proportion of the credit stored as magnetic information used up or remaining on the card, before the card is ejected.

Preferably the reader includes only a single card receiving slot and the card moves in one direction during the reading cycle and in the reverse direction during the writing cycle.

The invention also lies in a card for use with such a reader.

Preferably the data is stored on a magnetic strip on one face of the card.

The invention also lies in a method of visibly marking a machine readable card according to independent Claim 10.

### Description of embodiment

A practical embodiment of card reader in accordance with the invention is shown by way of example in the accompanying drawings, in which:
Figure 1 is an exploded view of the card reader, seen in side elevation with part of the near-side wall of the casing cut away;
Figure 2 is a plan view of the casing interior, with top cover and upper pcb removed;
Figure 3 is a corresponding underplan view, with bottom cover and lower pcb removed;
Figure 4 shows a read head forming part of the lower pcb;
Figure 5 is a front view of the casing;
Figure 6 shows an alternative magnetic head mounting and pressure pad;
Figure 7 is an underside plan view of an arrangement such as shown in Figure 6;
Figure 8 illustrates in 8(a) and 8(b) the two faces of a typical card, and
Figure 9 is a block schematic diagram illustrating the basic reading, writing, control and marking devices of the reader.

Referring to the drawings, a casing 10 is formed in upper and lower parts defining a partition wall 11 containing a card-receiving slot 12. In use, a card is pushed into the slot through an opening 13 in the front wall 14 of the casing, so that its leading end enters the nip of a roller pair 16, 16A carried by the partition wall 11. The two rollers are urged together, at an aperture in the partition wall, by spring strips 18, 18A of plastics material. Roller 16 is driven through reduction gearing 20 by a reversible electric motor 22; roller 16A is free to rotate but undriven.

Entry of the card is sensed to bring the drive motor 22 into operation, whereon the card is drawn fully into the casing. The motor then reverses to expel the card to a position from which withdrawal can be manually completed or drives forward for disposal according to application.

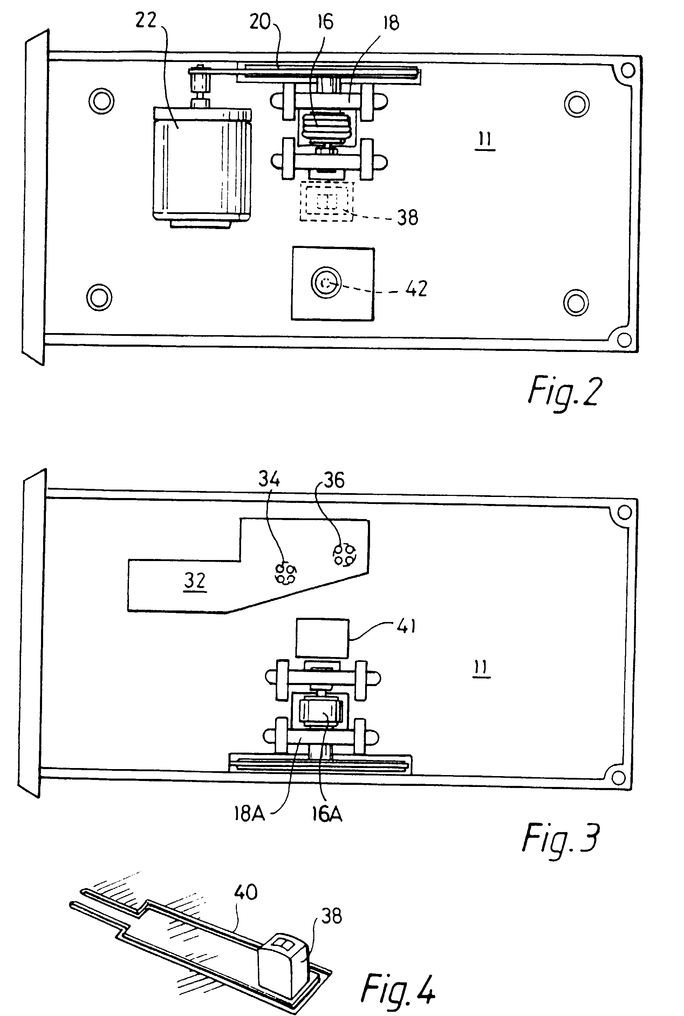

The casing 10 has top and bottom covers 24, 26 and accommodates upper and lower pcbs 28, 30 between the said covers and the partition wall. A further small pcb 32, carrying photo-electric sensing means 34, 36 is carried by the partition wall directly (see Figure 3).

The lower pcb 30 carries a read head 38 on a partially cut-out strip 40 of the pcb (see Figure 2). During insertion of the card bearing unused credit units, the read head, which is operative at an aperture 41 in the partition wall, reads data from a magnetic stripe on the card during motorised card insertion, and rewrites the data to embody the new, reduced credit during motorised card withdrawal. The pcb's carry the necessary circuitry, of generally conventional kind, for performing the read/write operations, for switching the motor on and off, for performing timing functions, and for interfacing with equipment with which the card reader is associated, etc. In general, this circuitry forms no part of the present invention.

In accordance with the invention, however, the vending card 41 may also be marked with a visible printed scale, for example bar markings, which are associated with the credit available on the card. Assuming for example that the card initially provides 10 credit units when new, a total of 10 bar markings may be provided in a row along the card indicating the proportion of value remaining on the card. The value taken from the card may be one, or a multiple, of the credits, and printed bars on the card may be marked appropriately. Credits may represent £'s, $'s or other monetary denominations or any value of items purchased etc.

Of the two photo-sensors 34, 36 previously referred to, one is used to sense the presence and ends of a card and thus control operation of the motor via the pcb circuits, and the other is used to locate the card for marking the appropriate credit bars.

Marking is achieved by a striker 42 which is arranged in alignment with the visibly marked credit bars. The striker 42 is spring loaded and is operable by a solenoid 44 mounted between the upper pcb 28 and the partition wall 11. The striker 42 operates, through an aperture in the partition wall, to mark off the credit bars as they are used up, thereby to provide the card holder with an updated visible record of the credit available on the card. The striker 42 is operated, under the control of the circuitry on the pcb's, at the appropriate instant (or instants) during the motor driven withdrawal movement of the card to ensure that the credit bars are correctly marked off. The striker 42 preferably operates by indenting (or possibly inking) the credit bars, although perforation of the card is alternatively possible.

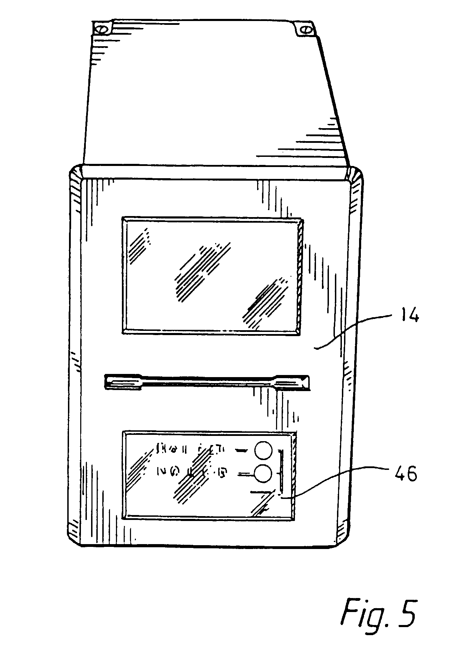

The front wall 14 of the reader, shown in Figure 5, preferably embodies a display 46 which, by means of coloured light emitting diodes or LCD display devices 48 provided on the lower pcb 30, indicates if credit (or sufficient credit) is available or not when the card is inserted into the reader.

The reader may also contain means for writing and reading operations, performed by the reader, means for sensing the numerical value of data stored on each card and for accumulating the numerical values so read and a second display (not shown) such as an LCD or LED multi-digit display device is included internally to indicate information relating to the reader, eg the number of cards presented to it, unit price, total value passed through the reader, total operations of the reader (for maintenance purposes) etc. To this end the electronic circuitry on the pcb 30 may include sensors and counters for computing and accumulating numerical data as aforesaid. Reset means (also not shown) may also be provided to enable the numerical accumulated values to be reset to zero. To prevent unauthorised reset, the latter may be safe-guarded by keyswitch means or by switch means controlled by data entry as by a code.

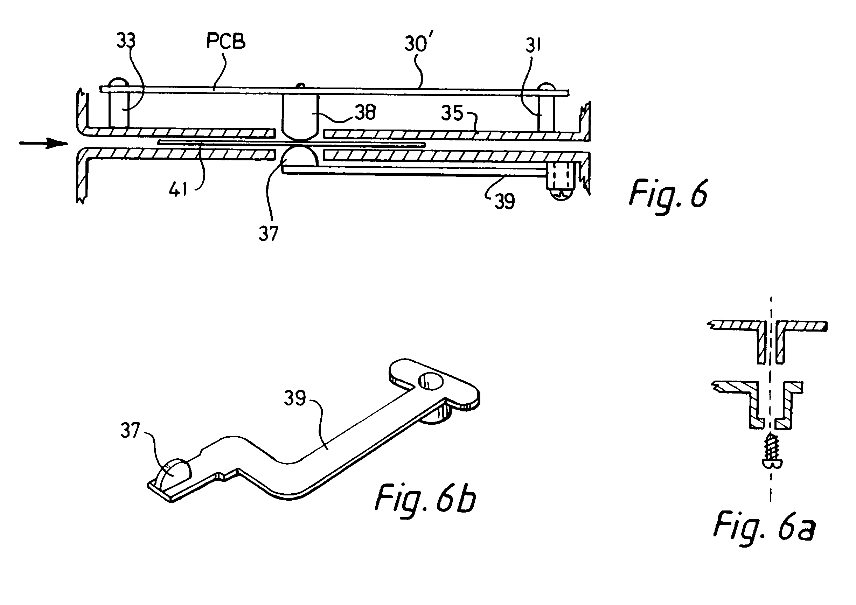

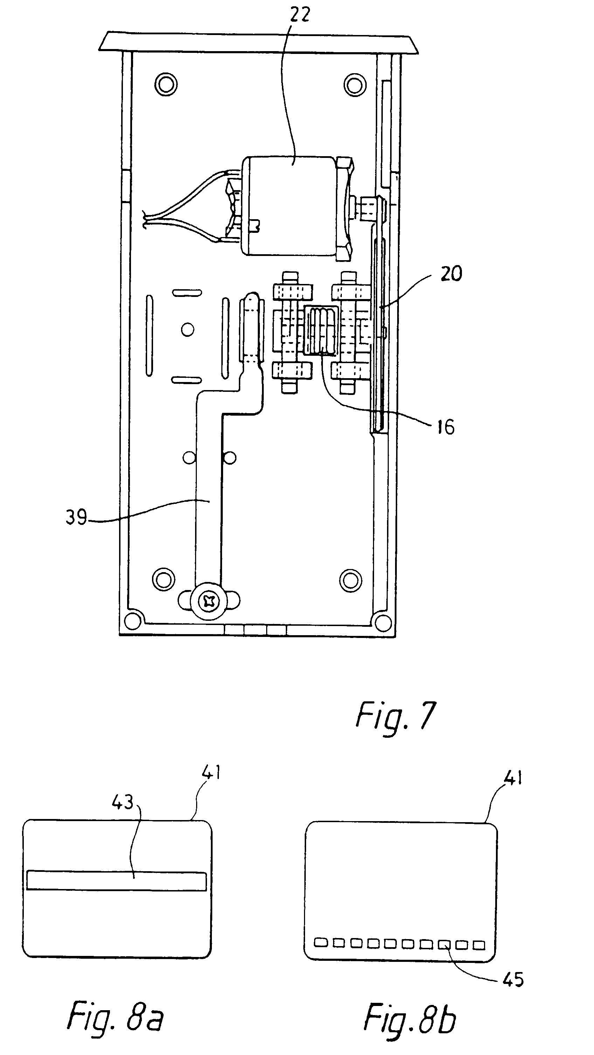

Figures 6 and 7 illustrate an alternative marking for the magnetic head 38. Thus instead of this being carried at the free end of a finger cut out from the pcb 30, the head may be securedly fixed to a pcb 30' itself mounted by stand-offs 31, 33 from a plate 35 forming one side of the card guide, the latter being apertured as before to allow the sensing end of the head to protrude therethrough into the path of the card (see Figure 6). Opposed to the head 38 is a pressure pad 37 carried by a leaf spring arm 39, anchored by a stand-off mounting as shown in the inset section Figure 6(a). The arm 39 is best seen in the perspective inset view Figure 6(b). The spring force exerted by the arm 39 is selected so as to ensure reliable contact between the head 38 and card (shown at 41 in Figure 6) to provide for reading the magnetic data thereon and if appropriate writing fresh data thereto. The arm 39 may be of resilient plastics material.

One example of card is shown in Figure 8. The underside shown in Figure 8(a) includes a magnetic strip 43 to and from which data can be written and read via the head 38. On the front (see Figure 8(b)) is printed a line of marks 45 which aligns with the marker solenoid 44 and striker 42 when the card is in the slot guide 12. Other information (not shown) may be printed on the card.

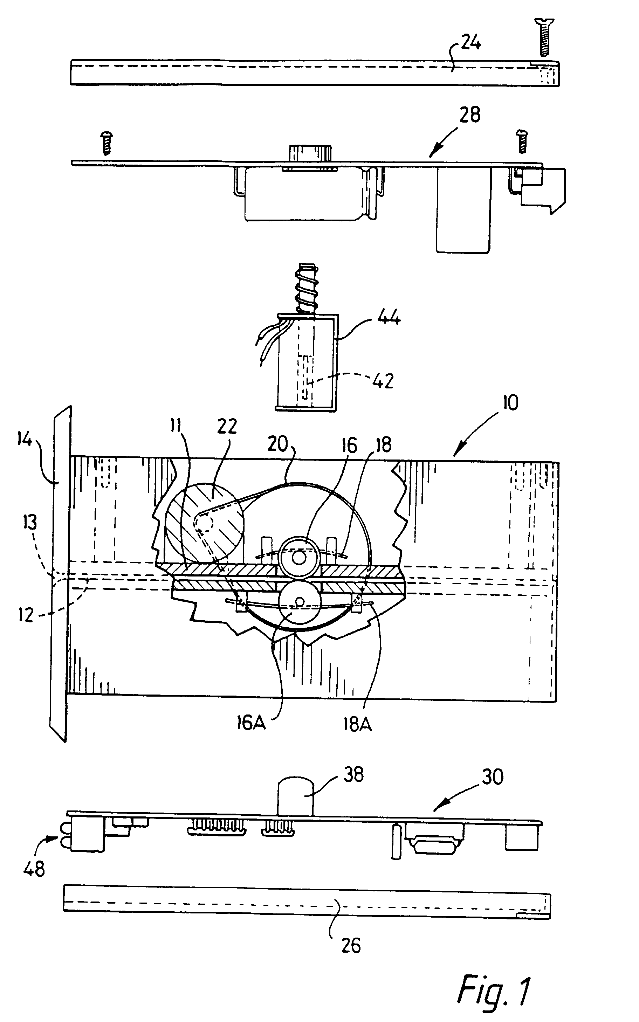

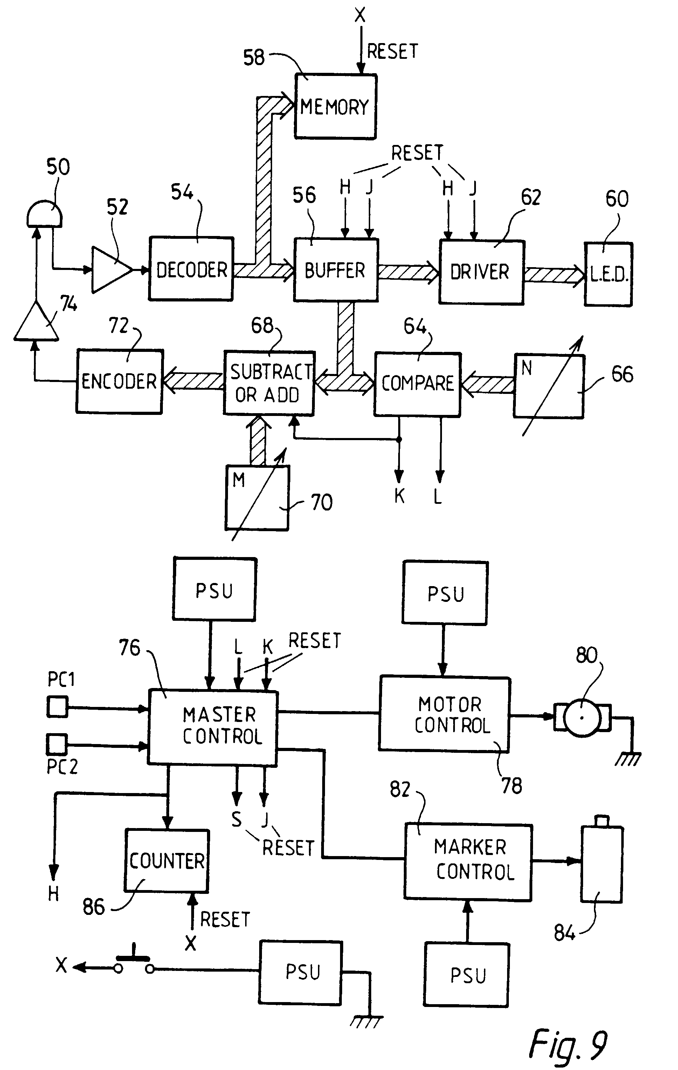

Referring now to Figure 9 there is shown a schematic circuit diagram of one example of the reading, writing, control and marking devices of the reader of Figures 1 to 8.

The reading coils of a magnetic read/write head 50 supply electrical signals to an amplifier and pulse shaper 52, when a card bearing magnetic data moves relative to the head. The pulses are decoded by decoder 54 into a digital signal for supply to a buffer memory 56 and accumulating memory 58. The buffer memory 56 drives an LED or LCD display 60 via a display driver 62 and the same digital signal is applied to a digital comparator 64 supplied with a digital reference value N from a programmable digital number generator 66.

The digital value from the buffer 56 is also supplied to an arithmatic unit 68 to which is supplied a second locally generated numerical value M from a programmable digital number generator 70.

The output of the arithmatic unit 68 is supplied to an encoder 22 to generate an appropriate pulse train for writing the digital number from the subtractor 68 via amplifier and pulse shaper 74 to the writing coils of the head 50.

In use the entry and subsequent movement of the card in the reader is detected by photocells PC1, PC2 which initially causes master control unit 76 (which may be microprocessor based) to generate a control signal via motor control 78 to cause motor 80 to rotate and drive a card (not shown) into the reader past the reading/writing head 50 to generate the pulses for supply to the decoder 54.

The comparator 64 determines whether the numerical value read from the card and residing in the buffer 56 is at least equal to the value N. If the transaction is a debiting transaction and if it is equal to or greater than the value N, a signal K is generated to trigger the arithmatic unit 68 to reduce the numerical value derived from the buffer 56 by M, and simultaneously trigger a master control drive such as a microprocessor 76 to generate a control signal via motor control 78 to cause motor 80 to rotate and drive the card (not shown) in a reverse direction past the head 50 to allow the pulses, indicative of the reduced number from 72, 74 to be written thereto.

If the transaction is a debiting transaction and the value in the buffer 56 is less than N, a signal L is generated, which on supply to the master control unit 76 causes the motor control 78 to drive the motor 80 and the card out of the reader without any rewriting of data or marking of the card. A signal S generated by the control unit 76 in this condition is supplied to the display driver 62 to cause a message to be displayed indicating insufficient credit.

The master control 76 also generates control signals for supply to a marker control circuit 82 to drive a marker solenoid 84 and cause a mark to be applied to the card during the reverse travel thereof through the reader. The timing of the marker drive signal is selected with reference to the position of the card relative to the solenoid driven marker 84, so that the mark is applied at a particular position along the card denoting (with reference to a scale printed thereon) the number of units which remain on the card (ie corresponding to the reduced number written to the card by 72, 74) or the number of units which have been debited from the original total on the card.

The master control unit 76 also generates reset signals H on entry of the card. Reset signals H are supplied to a counter 86 and to the buffer 57 and display driver 62 to reset all values to 0 when a card is inserted. Likewise reset signals I may also be generated on exit of the card which may be also supplied to the buffer 56 and driver 62 to reset these devices after a reading cycle.

The positions of PC1 and PC2 are selected to provide edge detection signals to the control unit 76 to provide information on the position of a card both during insertion and during exit, to enable the control signals for the motor 80 and marker 84 to be generated at the correct time and for the appropriate duration.

A manually operable push switch 88 allows a further reset signal X to be generated to reset the accumulators 86 and 88.

The reader may be used to read a card, determine whether the numerical value of units stored magnetically thereon is at least equal to a value N, if so deduct M from the numerical value and rewrite the data on the card to the new reduced value and at an appropriate moment during outward movement of the card, generate a marker drive signal to mark a scale on the card to denote the units remaining on, or debited from the card.

## Claims

1. A card reader for use with cards of the type having a magnetic surface (43) to and from which data can be written and read magnetically and which in addition include printed markings (45) thereon, the card reader being adapted to read magnetic data from and write magnetic data to such cards when inserted therein, and comprising marking means (42) within the reader for visibly marking the card relative to at least part of the printed marking thereon before the card is ejected from the reader, characterised in that there is provided a single card receiving slot (12) so that an inserted card is moveable in one direction during the reading cycle and in the reverse direction during the writing and marking cycle, and drive means (16,22) operable before the card is ejected to drive the card once again through the reader to enable the latter to re-read the newly written magnetic data on the card to verify that the information written to the card is correct before it is ejected.

2. A card reader as claimed in claim 1, wherein the marking is by way of inking, denting, punching, cutting or slitting.

3. A card reader as claimed in claim 2, in which the card reader is operable to read the magnetically stored credit data on a card during insertion of the latter, and after a debit instruction has been implemented to write new credit data on to the card during reverse travel of the latter through the reader.

4. A card reader as claimed in claim 3, wherein the marking means is also operable to mark the card during said reverse travel.

5. A card reader as claimed in claim 4, further comprising means (34,36) for sensing the movement of the card during withdrawal and means (44) responsive to the sensing means for actuating the marking means to mark the card during the withdrawal.

6. A card reader as claimed in any one of the claims 1 to 5, wherein the card is ejected from the rear, either as a means of disposal of the cards or as a means of passing the card forward during progressive transactions.

7. A card reader as claimed in any one of the preceding claims, further comprising display means (46) adapted to indicate information derived from the magnetic data stored on the card.

8. A card reader as claimed in any one of claims 1 to 7, further comprising sensors and counters for computing and accumulating numerical data derived from reading cards presented to the reader to provide the numerical values of the number of cards presented to the reader and/or the total number of card reading operations performed by the reader and/or the total value of units counted from cards presented to the reader; memory means to retain the numerical information as aforesaid, display means for displaying selectively the said numerical data, and reset means for resetting the stored numerical values to zero.

9. A card reader as claimed in any of the preceding claims, and a card which has a scale (45) printed thereon, wherein the reader is operable to generate a debit instruction after data has been satisfactorily read from the card and only after the debit instruction has been generated, the card marking means (42) is initiated to mark the card adjacent or on the scale and the writing mode initiated to write fresh data to the card, the fresh data denoting an amount of credit remaining on the card and the position of the mark, adjacent or on the scale, denoting the debited amount or the amount of credit remaining.

10. A method of visibly marking a machine readable card (43) and processing the card to perform a debit transaction, comprising the steps of: inserting a card (43) containing machine readable magnetically stored credit data in one direction into a reader and decoding data relating to credit stored thereon; generating a debit instruction to debit some or all of the units of credit data stored on the card; debiting the credit data, updating the magnetically stored data to the new reduced value, applying a visible marking as by printing or indenting, punching or cutting the card relative to a printed scale thereon, so as to indicate the credit remaining stored magnetically thereon or the amount debited therefrom, and ejecting the card in a reverse direction to leave the reader characterised in that whilst within the reader, the card is traversed forwards and backwards at least a second time without being ejected or seen, in order that the reader can re-read the newly written magnetic data on the card and verify the rewrite of the data.

11. A method as claimed in claim 10 further comprising the steps of:
- reading the card and noting the current magnetically stored credit data during insertion, and,
- after a debit instruction has been implemented, writing new credit data magnetically to the card as it travels in a reverse direction through the reader.

## Patentansprüche

1. Kartenleser zur Verwendung in Verbindung mit Karten, die eine Magnetfläche (43) aufweisen, in die Daten magnetisch eingeschrieben und aus denen Daten magnetisch ausgelesen werden können, und die zusätzlich gedruckte Markierungen (45) aufweisen, wobei der Kartenleser in der Lage ist, magnetische Daten aus in den Kartenleser eingeführten Karten auszulesen und in diese Karten einzuschreiben, und mit einer Markiervorrichtung (42) innerhalb des Kartenlesers zum sichtbaren Markieren der Karte relativ zu mindestens einem Teil der auf die Karte aufgedruckten Markierungen, bevor die Karte aus dem Leser ausgegeben wird,
**dadurch gekennzeichnet,** daß ein einzelner Kartenaufnahmeschlitz (12) vorgesehen und so ausgebildet ist, daß eine eingesetzte Karte in einer Richtung während des Lesezyklus und in der entgegengesetzten Richtung während des Schreib- und Markierzyklus bewegbar ist, und daß eine Antriebsvorrichtung (16, 22) betätigbar ist, bevor die Karte ausgegeben wird, um die Karte noch einmal durch den Kartenleser zu führen, damit letzterer die neu eingeschriebenen magnetischen Daten auf der Karte nochmals lesen kann, um zu verifizieren, daß die in die Karte eingeschriebenen Informationen korrekt sind, bevor die Karte ausgegeben wird.

2. Kartenleser nach Anspruch 1, dadurch gekennzeichnet, daß die Markierungen durch Farbauftrag, Prägen, Kerben, Stanzen, Schneiden oder Schlitzen ausgebildet sind.

3. Kartenleser nach Anspruch 2, dadurch gekennzeichnet, daß der Kartenleser so betätigbar ist, daß er die magnetisch gespeicherten Kreditdaten auf einer Karte während des Einführens der Karte und nachdem eine Debet-Instruktion veranlaßt hat, daß neue Kreditdaten auf der Karte während des umgekehrten Durchlaufes der Karte durch den Kartenleser eingeschrieben werden, ausliest.

4. Kartenleser nach Anspruch 3, dadurch gekennzeichnet, daß die Markiervorrichtung auch so betätigbar ist, daß sie die Karte während des umgekehrten Durchlaufes markiert.

5. Kartenleser nach Anspruch 4, gekennzeichnet durch eine Vorrichtung (34, 36) zum Feststellen der Bewegung der Karte währender Entnahme, und eine Vorrichtung (44), die auf die Feststellvorrichtung zur Betätigung der Markiervorrichtung anspricht, um die Karte bei der E ntnahme zu markieren.

6. Kartenleser nach einem der Ansprüche 1 - 5, dadurch gekennzeichnet, daß die Karte an der Rückseite ausgegeben wird, entweder zum Bereitstellen der Karte, oder aber, um die Karte während fortschreitender Transaktionen nach vorne zu transportieren.

7. Kartenleser nach einem der Ansprüche 1 - 6, gekennzeichnet durch eine Sichtanzeigevorrichtung (46), die Informationen anzeigt, welche aus den auf der Karte gespeicherten magnetischen Daten abgeleitet werden.

8. Kartenleser nach einem der Ansprüche 1 - 7, gekennzeichnet durch Sensoren und Zähler zum Berechnen und Akkumulieren numerischer Daten, die beim Ablesen von Karten abgeleitet werden, welche dem Kartenleser dargeboten werden, um die numerischen Werte der Anzahl von dem Kartenleser dargebotenen Karten und/oder die Gesamtanzahl von Kartenlesevorgängen, die von dem Kartenleser durchgeführt worden sind, und/oder den Gesamtwert von Einheiten, die aus den dem Kartenleser dargebotenen Karten gezählt werden, zu erzielen, eine Speichervorrichtung zum Aufnehmen der vorbeschriebenen numerischen Informationen, eine Sichtanzeigevorrichtung zum selektiven Anzeigen dieser numerischen Daten, und eine Rücksetzvorrichtung zum Rücksetzen der gespeicherten numerischen Werte auf Null.

9. Kartenleser nach einem der vorausgehenden Ansprüche, und Karte mit einer darauf aufgedruckten Skala (45), wobei der Kartenleser so betätigbar ist, daß er eine Debet-Transaktion erzeugt, nachdem Daten einwandfrei aus der Karte ausgelesen worden sind und nur, nachdem die Debet-Instruktion erzeugt worden ist, wobei die Kartenmarkiervorrichtung (42) mit dem Markieren der Karte in der Nähe oder an der Skala beginnt und der Schreibvorgang eingeleitet wird, um frische Daten in die Karte einzuschreiben, die einen Kreditbetrag darstellen, der auf der Karte verbleibt, und die Position der Markierung in der Nähe oder an der Skala den verbleibenden Kreditbetrag bezeichnet.

10. Verfahren zum sichtbaren Markieren einer maschinenlesbaren Karte (43) und zum Verarbeiten der Karte, um eine Debet-Transaktion durchzuführen, mit folgenden Schritten: Einführen einer maschinenlesbare Kreditdaten enthaltenden Karte (43) in einer Richtung in einen Kartenleser, und Decodieren von auf den gespeicherten Kredit bezogenen Daten, Erzeugen einer Debet-Instruktion, um einen Teil der oder alle Einheiten von auf der Karte gespeicherten Kreditdaten zu debetieren, Debetieren der Kreditdaten, Fortschalten der magnetisch gespeicherten Daten auf den neuen, verringerten Wert, Aufbringen einer sichtbaren Markierung, wie z.B. durch Drucken, Prägen, Stanzen oder Schneiden der Karte relativ zu einer darauf angebrachten gedruckten Skala, um den verbleibenden Kredit, der auf der Karte magnetisch gespeichert ist, oder den davon debetierten Betrag anzuzeigen, und Ausgeben der Karte in einer Gegenrichtung zum Verlassen des Kartenlesers,
dadurch gekennzeichnet, daß die Karte, während sie im Kartenleser verbleibt, vorwärts und rückwärts mindestens ein zweites Mal hindurchgeführt wird, ohne daß die Karte ausgegeben oder betrachtet wird, damit der Leser die neu eingeschriebenen Magnetdaten auf der Karte nochmals lesen und die neue Einschreibung der Daten verifizieren kann.

11. Verfahren nach Anspruch 10, dadurch gekennzeichnet, daß die Karte ausgelesen und die laufenden, magnetisch gespeicherten Kreditdaten während des Einführens notiert werden, und daß nach Ausführung eine Debet-Instruktion neue Kreditdaten magnetisch in die Karte eingeschrieben werden, wenn die Karte in umgekehrter Richtung durch den Kartenleser geführt wird.

## Revendications

1. Un lecteur de cartes à utiliser avec des cartes équipées d'une surface magnétique (43) sur et à partir de laquelle des données peuvent être écrites et lues magnétiquement et qui, en plus, portent des marquages imprimés (45), le lecteur de carte étant capable de lire et d'écrire des données magnétiques à partir et sur de telles cartes lorsqu'elles sont insérées dans celui-ci, et équipé d'un dispositif de marquage (42) pour le marquage visible de la carte en fonction au moins d'une partie du marquage imprimé sur la carte avant qu'elle ne soit éjectée du lecteur, celui-ci étant caractérisé par la présence d'une seule fente de réception de la carte (12) de façon à ce qu'une carte insérée puisse se déplacer dans un sens lors du cycle de lecture et dans le sens inverse au cours du cycle d'écriture et de marquage, et d'un dispositif d'entraînement (16, 22) qui va se mettre en marche avant que la carte ne soit éjectée pour entraîner la carte une nouvelle fois à travers le lecteur afin que ce dernier puisse relire les données magnétiques qui viennent d'être écrites pour vérifier que les informations écrites sur la carte soient correctes avant que cette dernière ne soit éjectée.

2. Un lecteur de cartes conformément à la revendication 1 où le marquage est effectué par encrage, empreinte, poinçonnage, découpage ou refente.

3. Un lecteur de cartes conformément à la revendication 2 dans laquelle le lecteur de cartes est capable de fonctionner pour lire les données de crédit stockées magnétiquement sur une carte au cours de l'insertion de cette dernière, et après qu'une instruction de débit ait été initiée pour écrire les nouvelles données de crédit sur la carte au cours du déplacement dans le sens inverse de cette dernière à travers le lecteur.

4. Un lecteur de cartes conformément à la revendication 3 où le dispositif de marquage est également capable de fonctionner pour marquer la carte au cours du déplacement dans le sens inverse.

5. Un lecteur de cartes conformément à la revendication 4 comprenant également des dispositifs (34, 36) de détection du mouvement de la carte au cours du retrait et un dispositif (44) qui répond au dispositif de détection pour commander au dispositif de marquage de marquer la carte au cours du retrait.

6. Un lecteur de cartes conformément à l'une des revendications 1 à 5 où la carte est éjectée par l'arrière, soit en tant que dispositif de mise au rebut de la carte soit en tant que dispositif d'entraînement vers l'avant de la carte au cours de transactions progressives.

7. Un lecteur de cartes conformément à l'une des revendications précédentes comprenant également un dispositif d'affichage (46) capable d'indiquer les informations dérivées des données magnétiques stockées sur la carte.

8. Un lecteur de cartes conformément à l'une des revendications 1 à 7, comprenant également des détecteurs et des compteurs pour le calcul et l'accumulation des données numériques dérivées de la lecture des cartes présentées au lecteur pour fournir les valeurs numériques du nombre de cartes présentées au lecteur et/ou du nombre total d'opérations de lecture de la carte exécutées par le lecteur et/ou de la valeur totale d'unités comptée à partir des cartes présentées au lecteur; un dispositif de mémoire pour retenir les informations numériques comme il est susmentionné, un dispositif d'affichage pour l'affichage sélectif des données numériques et un dispositif de réinitialisation pour la remise à zéro des valeurs numériques stockées.

9. Un lecteur de cartes conformément à n'importe laquelle des revendications précédentes et une carte sur laquelle est imprimée une échelle (46), où le lecteur est capable de fonctionner pour générer une instruction de débit après une lecture satisfaisante des données et, seulement après que l'instruction de débit ait été générée, le dispositif de marquage de la carte (42) est initié pour marquer la carte à côté de ou sur l'échelle et le mode d'écriture est initié pour écrire des données fraîches sur la carte, ces données fraîches indiquant le crédit restant sur la carte et la position de la marque, à côté de ou sur l'échelle, indiquant la quantité débitée ou le crédit restant.

10. Une méthode de marquage visible d'une carte en langage machine (43) et de traitement de la carte pour exécuter un prélèvement se déroulant selon les étapes suivantes: insertion d'une carte (43) contenant des données de crédit magnétiquement stockées en langage machine dans un sens dans le lecteur et décodage des données en fonction du crédit stocké; initiation d'une instruction de débit pour débiter quelques ou toutes les unités de données de crédit stockées sur la carte; prélèvement des données de crédit, remise à jour des données stockées magnétiquement à la nouvelle valeur réduite, application d'un marquage visible par encrage, empreinte, poinçonnage ou découpage de la carte en fonction de l'échelle imprimée sur cette dernière, afin d'indiquer le crédit restant stocké magnétiquement sur la carte ou la quantité débitée de la carte, et éjection de la carte dans le sens inverse pour quitter le lecteur, avec la caractéristique suivante: la carte est déplacée vers l'avant ou l'arrière au moins une deuxième fois sans être éjectée ni détectée, afin que le lecteur puisse relire les données magnétiques qui viennent d'être écrites sur la carte et vérifier la relecture des données.

11. Une méthode conformément à la revendication 10 comprenant également les étapes suivantes:
- lecture de la carte et enregistrement des données de crédit magnétiquement stockées courantes lors de l'insertion et,
- après initiation d'une instruction de débit, écriture magnétique des nouvelles données de crédit sur la carte alors qu'elle se déplace dans le sens inverse à travers le lecteur.
